# EUROPEAN PATENT APPLICATION

(11) **EP 4 321 221 A1**
(43) Date of publication of application: **14.02.2024**
(21) Application number: 22936924.4
(22) Date of filing: 15.04.2022
(51) Int. Cl.: A62C 3/07, H01M 10/46

(54) **GAS PROCESSING SYSTEM AS WELL AS CONTROL METHOD THEREOF, AND ELECTRIC APPARATUS**

(71) Applicant: Contemporary Amperex Technology Co., Limited, Ningde, Fujian 352100 (CN)
(72) Inventor: LIU, Yang, Ningde, Fujian 352100 (CN); QIU, Wei, Ningde, Fujian 352100 (CN)
(74) Representative: Ziebig Hengelhaupt Intellectual Property Attorneys Patentanwaltskanzlei PartGmbB
(86) International application number: PCT/CN2022/086945
(87) International publication number: WO 2023/197276

(57) **Abstract**

The application relates to a gas processing system (400), a control method thereof, and an electrical device (1000). The gas processing system includes: a gas storage container (410), a controller (420), and a switch component (430). The gas storage container (410) has a first gas flow branch (a) configured for communicating with a battery box (100') and supplies a dry gas to the battery box (100'). The controller (420) is configured to acquire a state parameter of a gas in the battery box (100'). The switch component (430) is arranged on the first gas flow branch (a) and configured to be switched between a first state, in which the first gas flow branch (a) is turned on, and a second state, in which the first gas flow branch (a) is blocked. The controller (420) is in communication connection with the switch component (430), and configured to control the switch component (430) to be switched from the second state to the first state when the state parameter of the gas acquired satisfies a preset condition. In the present application, by monitoring the state of the gas in the battery box (100'), the gas storage container (410), is controlled to supply the dry gas to the battery box (100'), so as to keep the gas in the battery box (100') in a dried state. In this way, it is avoided the formation of the condensed water caused by moisture condensation, which would otherwise damage the internal components of the battery box (100'), or even cause safety hazards such as short circuits.

## Description

### TECHNICAL FIELD

The present application relates to the field of new energy vehicles, and more particularly to a gas processing system, a control method thereof, and an electrical device.

### BACKGROUND

With the country's vigorous development of new energy vehicles, the electrification rate of passenger cars and transport vehicles has increased significantly, and the application scenarios of new energy vehicles have become more extensive.

In order to meet the environmental adaptability requirements, the protection level design of the battery box of the vehicle is basically designed according to the IP6X and IPX8 standards, which, however, cannot fundamentally solve the problem of external moisture entering the battery box, as well as the problem of the damage on the components or even short circuit inside the battery box cause by the external moisture entering the battery box.

### SUMMARY

In view of the above problems, the present application provides a gas processing system, a control method thereof, and an electrical device, which can alleviate the problem of internal components being damaged or even short-circuited due to external water vapor entering the battery box.

In a first aspect, the present application provides a gas processing system, including: a gas storage container, a controller, and a switch component. The gas storage container has a first gas flow branch configured for communicating with a battery box and is configured to supply a dry gas to the battery box. The controller is configured to acquire a state parameter of a gas in the battery box. The switch component is arranged on the first gas flow branch and configured to be switched between a first state, in which the first gas flow branch is turned on, and a second state, in which the first gas flow branch is blocked. The controller is in communication connection with the switch component, and configured to control the switch component to be switched from the second state to the first state when the state parameter of the gas acquired satisfies a preset condition.

In the technical solution of the embodiment of the present application, by monitoring the state of the gas in the battery box, the gas storage container is controlled to supply the dry gas to the battery box, and the supplied dry gas is used to maintain the gas in the battery box in a dried state, thereby avoiding the formation of the condensed water caused by moisture condensation, which would otherwise damage the internal components of the battery box, or even cause safety hazards such as short circuits.

In some embodiments, the state parameter of the gas includes a humidity feature, and the controller is configured to control the switch component to be switched from the second state to the first state when the humidity feature acquired satisfies a preset dehumidification condition. In such condition, it is determined, directly according to the humidity feature of the gas, whether it is necessary to provide the dry gas to the battery box and to replace the moisture in the battery box with the dry gas, so as to avoid the generation of condensed water in a more accurate manner.

In some embodiments, the gas storage container further has a second gas flow branch, configured for communicating with a brake system and supplying a brake gas to the brake system. In such condition, the gas storage container can not only provide dry gas to the battery box of the traveling device through the first gas flow branch, so as to ensure the safety performance of the battery box and improve the safety of power consumption of the traveling device, but also provide the brake system of the traveling device with the dry gas. Therefore, the gas storage container has multiple functions, which not only improves the utilization rate of the gas storage container, but also helps to simplify the structure of the traveling device and reduce the cost.

In some embodiments, the state parameter of the gas comprises a gas pressure feature, and the controller is configured to control the switch component to be switched from the second state to the first state when the gas pressure feature acquired satisfies a preset inflation condition. In such condition, by monitoring the gas pressure of the gas in the battery box to determine whether it is necessary to provide the dry gas to the battery box to ensure the gas pressure in the battery box, the external moisture is prevented from entering the battery box when the gas pressure in the battery box is low, which is conducive to completely avoiding the generation of condensate water and the resulting safety hazards such as component damage and short circuit.

In some embodiments, the controller is further configured to determine a gas tightness state of the battery box according to the gas pressure feature acquired. When the seal of the battery box fails, it may not be possible to change the internal gas state only by supplying dry gas into the battery box. In such condition, it can be detected in time when the seal of the battery box fails, so that relevant personnel can find problems and repair the battery box in time, which can help the gas processing system enter the normal operation state and prevent the deterioration of the internal environment of the battery box in time.

In some embodiments, the gas processing system further comprises a gas processing component. The gas processing component is arranged on the first gas flow branch and is configured to purify and/or dry a dry gas flowing from the gas storage container to the battery box. In such condition, before entering the battery box, the dry gas is further purified and/or dried by the gas processing component, which can filter and dry the impurity particles and oil stains in the dry air, and prevent the impurity particles and oil stains from entering the battery box and causing damages to the components inside the battery box and the internal short circuit and the resulting potential safety hazards.

In some embodiments, the gas processing system further comprises: an air compressor, a cooler, and a dryer; the cooler is connected between the air compressor and the dryer; the dryer is connected with the gas storage container. A compressed air generated by the air compressor is cooled by the cooler, dried by the dryer, and then stored in the gas storage container. In such condition, the compressed air generated by the air compressor is used as the gas source, which is stored in the gas storage container after being cooled and dried. The gas source has a wide range of sources and the cost is low. Moreover, when the gas processing system is applied to the traveling device such as a vehicle, the air compressor, the cooler, the dryer, and the gas storage tank, which have already equipped in the traveling device for providing the brake air to the brake system can be used as parts of the gas processing system and are combined to form the gas processing system, the improvement cost of which is low.

In some embodiments, the gas processing system further comprises a decompression component, and the decompression component is arranged in the first gas flow branch. Since the compressed air produced by the air compressor has a certain pressure, in such condition, the pressure of the dry air can be properly reduced by the decompression component when the dry air enters the battery boxy, which can reduce the impact and damage of the high-pressure gas on the internal components of the battery box; moreover, it can be avoided the pressure relief of the balance valve/explosion-proof valve on the battery box caused by the high internal pressure of the battery box.

In some embodiments, the state parameter of the gas comprises a gas pressure feature. The controller is in communication connection with the decompression component and is configured to adjust an outlet pressure of the decompression component according to the gas pressure feature acquired. In such condition, the controller can adjust the outlet pressure of the decompression component according to the gas pressure feature in the battery box, which is helpful for timely dehumidification inside the battery box.

In some embodiments, the gas processing system comprises a gas distribution component, the gas distribution component is in connection with the first gas flow branch, and is arranged at a flow where the dry gas flows from the first gas flow branch to the battery box. The gas distribution component has at least one gas distribution branch, one end of each gas distribution branch communicates with the first gas flow branch, and another end of each gas distribution branch is configured to communicate with the battery box. In such condition, the dry air flowing out from the first gas distribution branch can flow into one battery box through each flow branch, so that dehumidification management can be performed on multiple battery boxes at the same time, and the utilization rate of the gas processing system can be improved.

In some embodiments, a flow valve is arranged on each gas distribution branch. In such condition, the dehumidification control can be carried out independently according to the actual situations of the various battery boxes, and the control is more precise.

In a second aspect, the present application provides a control method of a gas processing system. The method comprises the steps of:
obtaining a state parameter of gas in a battery box; in which, the battery box communicates with a first gas flow branch of a gas storage container, and a switch component is arranged on the first gas flow branch and configured to be switched between a first state, in which the first gas flow branch is turned on, and a second state, in which the first gas flow branch is blocked; and
controlling, when the state parameter of the gas satisfies a preset condition, the switch component to be switched from the second state to the first state.

In the technical solution of the embodiment of the present application, by monitoring the state of the gas in the battery box, the gas storage container is controlled to supply the dry gas to the battery box, and the supplied dry gas is used to maintain the gas in the battery box in a dried state, thereby avoiding the formation of the condensed water caused by moisture condensation, which would otherwise damage the internal components of the battery box, or even cause safety hazards such as short circuits.

In some embodiments, the state parameter of the gas comprises a humidity feature, and the step of controlling, when the state parameter of the gas satisfies a preset condition, the switch component to be switched from the second state to the first state comprises: controlling, when the humidity feature satisfies a preset dehumidification condition, the switch component to be switched from the second state to the first state. In such condition, it is determined, directly according to the humidity feature of the air, whether it is necessary to provide the dry air to the battery box and to replace the moisture in the battery box with the dry air, so as to avoid the generation of condensed water in a more accurate manner.

In some embodiments, the state parameter of the gas comprises a gas pressure feature, and the step of controlling, when the state parameter of the gas satisfies a preset condition, the switch component to be switched from the second state to the first state comprises: controlling, when the gas pressure feature satisfies a preset inflation condition, the switch component to be switched from the second state to the first state. In such condition, by monitoring the gas pressure of the gas in the battery box to determine whether it is necessary to provide the dry gas to the battery box to ensure the gas pressure in the battery box, the external moisture is prevented from entering the battery box when the gas pressure in the battery box is low, which is conducive to completely avoiding the generation of condensate water and the resulting safety hazards such as component damage and short circuit.

In some embodiments, after the step of obtaining the state parameter of the gas in the battery box, the method further comprises: determining a gas tightness state of the battery box according to the gas pressure feature. In such condition, it can be detected in time when the seal of the battery box fails, so that relevant personnel can find problems and repair the battery box in time, which can help the gas processing system enter the normal operation state and prevent the deterioration of the internal environment of the battery box in time.

In a third aspect, the present application provides an electrical device, which includes a battery box and the gas processing system in the above embodiments, and the first gas flow branch is connected to the battery box. The battery box is provided therein with a detector, configured for obtaining the state parameter of the gas in the battery box. The controller is in communication connection with the detector and is configured to acquire the state parameter of the gas from the detector

In some embodiments, the battery box has a gas inlet and a gas outlet for communicating an inside and an outside of the battery box, and the gas inlet communicates with the first gas flow branch. The battery box comprises a ventilation component arranged at the gas outlet, and the ventilation component is configured to allow air to flow from a side having a relatively high gas pressure to a side having a relatively low gas pressure through the gas outlet in case of a pressure difference between the inside and the outside the battery box. In such condition, the ventilation component allows the air inside and outside the battery box to circulate through the gas outlet. When the dry gas is input into the battery box, the pressure inside the battery box changes and thus has a positive pressure difference with the outside. In such condition, the original moisture inside the battery box can be released. The dry gas is driven out to the outside of the battery box through the gas outlet to achieve dehumidification.

In some embodiments, the battery box further comprises a gas intake component, configured for opening and closing the gas inlet, and the gas intake component is in communication with the first gas flow branch. In such condition, it is convenient to connect the first gas flow branch to the gas inlet of the battery box through the gas intake component, moreover, the gas intake component can open and close the gas inlet; and when the battery box does not need to be connected to the first gas flow branch, the gas intake components can close the gas inlet, which is convenient for the transport and storage of the battery box.

In some embodiments, the electrical device comprises a brake system; the gas storage container further has a second gas flow branch; and the second gas flow branch is configured to communicate with the brake system and provide a brake gas for the brake system. In such condition, the gas storage container can not only provide dry gas to the battery box of the traveling device through the first gas flow branch, so as to ensure the safety performance of the battery box and improve the safety of power consumption of the traveling device, but also provide the brake system of the traveling device with the dry gas. Therefore, the gas storage container has multiple functions, which not only improves the utilization rate of the gas storage container, but also helps to simplify the structure of the traveling device and reduce the cost.

The above description is only a summary of the technical solutions of the present application. To make the technical means of the present application better understood and implemented according to the contents of the description, and in order to make the above and other purposes, features and advantages of the present application more obvious and understandable, the specific embodiments of the present application are described in details hereinbelow.

### BRIEF DESCRIPTION OF THE DRAWINGS

Upon reading the following detailed description of the preferred embodiments, other advantages and benefits will become apparent to those skilled in the art. The drawings are only for the purpose of illustrating the preferred embodiments and are not to be considered as limiting the application. Moreover, same reference numerals are used to denote the same components throughout the drawings. In the attached figures:
FIG. 1 is a schematic structural diagram of a vehicle in an embodiment of the present application;
FIG. 2 is an exploded view of a battery in an embodiment of the present application;
FIG. 3 is an exploded structure diagram of a battery cell in an embodiment of the present application;
FIG. 4 is a schematic diagram of the application of a gas processing system in an embodiment of the present application; and
FIG. 5 is a flowchart of a control method for a gas processing system in an embodiment of the present application.

The reference numerals in the specific embodiments are as follows:
1000: vehicle;
100': Battery box; 100: Battery; 200: Control device; 300: Motor;
10: Cabinet; 11: First part; 12: Second part;
20: Battery cell; 21: End cover; 21a: Electrode terminal; 22: Shell; 23: Cell assembly; 23a: Tab; 30: Air intake component; 40: Ventilation component; 50: Detector;
400: Gas processing system; 410: Gas storage container; a: First gas flow branch; b: Second gas flow branch; 420: Controller; 430: Switch component; 440: Gas processing component; 450: Air compressor; 460: Cooler; 470: Dryer; 480: Decompression component; 490: Gas distribution component; c: Gas distribution branch; 491: Flow valve; A: Gas source part; B: Processing part; and
500. Brake system.

### DETAILED DESCRIPTION OF THE EMBODIMENTS

Embodiments of the technical solutions of the present application will be described in detail below in conjunction with the accompanying drawings. The following embodiments are only used to illustrate the technical solution of the present application more clearly, and therefore are only exemplary, rather than limiting the protection scope of the present application.

Unless otherwise defined, all technical and scientific terms used herein have the same meaning as commonly understood by those skilled in the art of the application; the terms used herein are only for the purpose of describing specific embodiments, and are not intended to limit the present application; the terms "comprising" and "having" and any variations thereof in the specification and claims of the present application and the description of the drawings are intended to cover a non-exclusive inclusion.

In the description of the embodiments of the present application, the technical terms "first" and "second" are only used to distinguish different objects, and should not be understood as indicating or implying relative importance or implicitly indicating the number, specific order, or primary-secondary relationship of the indicated technical parameters. In the description of the embodiments of the present application, "plurality" means two or more, unless otherwise specifically defined.

Reference to "embodiment" herein means that a specific parameter, structure, or feature described in connection with the embodiments may be included in at least one embodiment of the present application. The occurrences of this phrase in various places in the specification are not necessarily all referring to the same embodiment, nor are separate or alternative embodiments which are mutually exclusive of other embodiments. It is understood explicitly and implicitly by those skilled in the art that the embodiments described herein can be combined with other embodiments.

In the description of the embodiment of the present application, the term "and/or" is only an association relationship describing associated objects, which means that three kinds of relationships can be included, for example, A and/or B may mean the following conditions: A exists alone, both A and B exist at the same time, and B exists alone. In addition, the character "/" in this application generally indicates that the associated objects have an "or" relationship.

In the description of the embodiments of this application, the term "multiple" refers to more than two (including two), similarly, "multiple groups" refers to two or more groups (including two groups), and "multiple pieces" refers to is more than two pieces (including two pieces).

In the description of the embodiments of the present application, the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate the orientation or positional relationship based on the drawing's orientation or positional relationship is only for the convenience of describing the embodiments of the present application and simplifying the description, and does not indicate or imply that the device or element referred to must have a specific orientation, be constructed, or operated in such a specific orientation, and therefore cannot be understood as an limitation to embodiments of the present application.

In the description of the embodiments of this application, unless otherwise clearly specified and limited, technical terms such as "installation", "connection", "attachment", "fixation", and the like should be interpreted in a broad sense, for example, it can be a fixed connection, or a detachable connection, or integration as a while; it can also be a mechanical connection, or an electrical connection; it can be a direct connection, or an indirect connection through a medium, and it can be the internal communication of two components or the interaction relationship between two components. Those skilled in the art can understand the specific meanings of the above terms in embodiments of the present application according to specific situations.

Batteries are not only used in energy storage power systems, such as hydropower, firepower, wind power, and solar power plants, but also widely used in electric vehicles, such as electric bicycles, electric motorcycles, electric vehicles, as well as technical fields, such as military equipment, aerospace, and the like.

Inventors noticed that when the battery box is in a complex environment, such as high temperature, high humidity, and large temperature difference between day and night, due to the large temperature difference between the inside and outside of the battery box, a difference between gas pressures inside and outside the battery box is large, and external moisture can easily pass through a balance valve/explosion-proof valve/sealed joint on the battery box to enter the battery box, and condense to form condensed water when coming into contact with low-temperature components (such as a water-cooled plate) in the battery box. The condensed water is an important factor that damages the components in the battery box and even causes short circuit.

In order to alleviate potential safety hazards caused by the easy entry of external moisture into the battery box, the applicant has found through research that the generation of condensed water can be controlled by reducing the moisture content inside the battery box, thereby avoiding the potential safety hazards caused by condensed water. For example, a desiccant is accommodated in the battery box, and the desiccant is used to absorb moisture, and the battery box is regularly opened for maintenance and replacement of the desiccant to ensure that the inside of the battery box is dry. However, such treatment method may have a hidden danger of a short circuit inside the battery box caused by conduction of moisture-absorbing saturated desiccant in case that the battery box is not maintained for a long time, and is also time-consuming and labor-intensive. Alternatively, by monitoring the gas state inside the battery box, the gas inside the battery box is guaranteed to be dry, the moisture content in the battery box is reduced, and the generation of condensed water is avoided.

Based on the above considerations, in order to solve the problem of potential safety hazards caused by the easy entry of external moisture into the battery box, the inventor has developed a gas processing system after in-depth research. By monitoring the gas state inside the battery box, the gas storage container is used to supply dry gas to the battery box to maintain the dryness of the gas inside the battery box and avoid the generation of condensed water, thereby avoiding potential safety hazards caused by the condensed water.

The battery box mentioned in the present application is generally composed of battery cells, a housing, a battery management system, and related installation structural parts. The gas processing system provided by the present application is mainly configured to treat the moisture in the housing of the battery box. The battery box may be the battery mentioned below, or a device composed of a plurality of batteries mentioned below. That is to say, the housing of the battery box may be constituted by the cabinet of the battery mentioned below, or may be a cabinet structure for accommodating the batteries mentioned below, which is not specifically limited. In the present application, for the convenience of description, it is mainly described by taking the housing of the battery box being the cabinet of the battery mentioned below as an example.

The gas processing system mentioned in the present application can be configured on any device/equipment/system equipped with a battery box. Specifically, the gas processing system may be, but is not limited to be, configured in energy storage systems such as wind power storage systems, thermal power storage systems, and solar power storage systems, and can also be, but is not limited to be, configured in mobile phones, tablets, laptops, electric toys, electric tools, battery cars, electric vehicles, ships, spacecraft, and other electrical devices. Among them, electric toys may include stationary or mobile electric toys, for example, game consoles, electric car toys, electric boat toys, electric airplane toys, and the like.

In the following embodiments, for convenience of description, an electric device according to an embodiment of the present application is taken as an example for description.

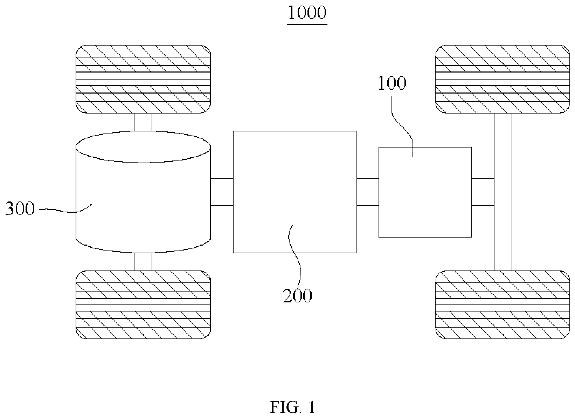

Referring to FIG. 1, which is a schematic structural diagram of a vehicle 1000 provided by some embodiments of the present application. The vehicle 1000 can be a fuel vehicle, a gas vehicle, or a new energy vehicle, and the new energy vehicle can be a pure electric vehicle, a hybrid vehicle, or an extended-range vehicle. The inside of the vehicle 1000 is provided with a battery 100, and the battery 100 may be provided at the bottom, head, tail, or top of the vehicle 1000. The battery 100 can be used for power supply of the vehicle 1000, for example, the battery 100 can be used as an operating power source of the vehicle 1000. The vehicle 1000 may further include a control device 200 and a motor 300, and the control device 200 is used to control the battery 100 to provide power to the motor 300, for example, for starting, navigating, and running the vehicle 1000.

In some embodiments of the present application, the battery 100 can not only be used as the operating power source for the vehicle 1000, but can also be used as a driving power source for the vehicle 1000, replacing or partially replacing a fuel oil or a natural gas to provide driving power for the vehicle 1000.

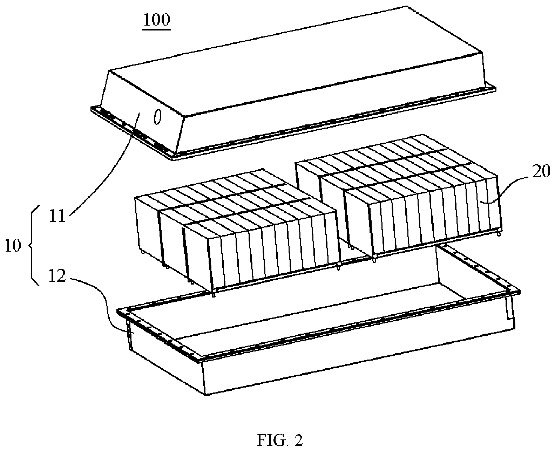

Referring to FIG. 2, which is an exploded view of a battery 100 provided by some embodiments of the present application. The battery 100 includes a cabinet 10 and battery cells 20 accommodated in the cabinet 10. The cabinet 10 is used to provide an accommodating space for the battery cells 20, and the cabinet 10 may adopt various structures. In some embodiments, the cabinet 10 may include a first part 11 and a second part 12, the first part 11 and the second part 12 cover each other, and the first part 11 and the second part 12 jointly define an accommodation space for accommodating the battery cells 20. The second part 12 can be a hollow structure with one side open, the first part 11 can be a plate-shaped structure, and the first part 11 covers the opening side of the second part 12, so that the first part 11 and the second part 12 jointly define the accommodation space. Or alternatively, both the first part 11 and the second part 12 can be hollow structures with one side opening, and the opening side of the first part 11 is covered by the opening side of the second part 12. It can be understood that the cabinet 10 formed by the first part 11 and the second part 12 can be in various shapes, such as a cylinder, a cuboid, and the like.

In the battery 100, the number of the battery cells 20 may be a plural. The plurality of battery cells 20 may be connected in series, in parallel or in a combined connection manner. The combined connection manner means that the plurality of battery cells 20 are connected in series as well as in parallel. A plurality of battery cells 20 can be directly connected in series, in parallel, or in a combined connection manner, then the plurality of battery cells 20 as a whole are accommodated in the cabinet 10. It can be understood that the battery 100 can also be as follows: a plurality of battery cells 20 are firstly connected in series or in parallel or in a combined connection manner to form a battery module, and then a plurality of the battery modules are connected in series or in parallel or in a combination connection manner to form a whole, which is accommodated in the cabinet 10. The battery 100 may also include other structures, for example, the battery 100 may also include a bus component for realizing electrical connection between multiple battery cells 20.

Each battery cell 20 may be a secondary battery or a primary battery; or may also be a lithium battery, a lithium-sulfur battery, a sodium-ion battery or a magnesium-ion battery, but is not limited thereto. The battery cell 20 may be in the form of a cylinder, a flat body, a cuboid, or other shapes.

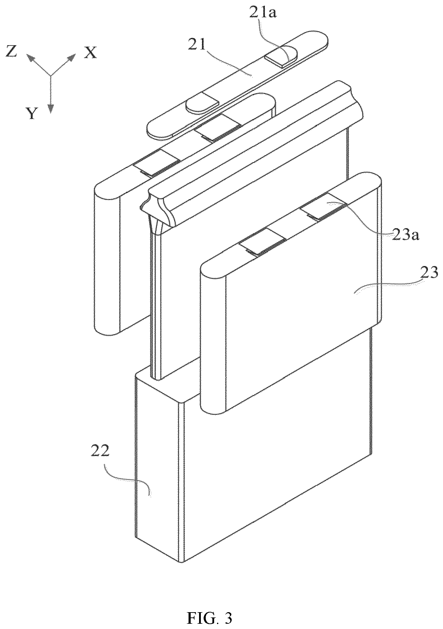

Referring to FIG. 3, which is a schematic diagram of an exploded structure of a battery cell 20 provided in some embodiments of the present application. The battery cell 20 refers to a smallest unit constituting a battery. As shown in FIG. 3, the battery cell 20 includes an end cover 21, a shell 22, a battery cell assembly 23, and other functional components.

The end cover 21 refers to a component that covers the opening of the shell 22 to isolate the internal environment of the battery cell 20 from the external environment. Without limitation, the shape of the end cover 21 can be adapted to the shape of the shell 22 to fit the shell 22. Optionally, the end cover 21 can be made of a material (such as aluminum alloy) with a certain hardness and strength, so that the end cover 21 is not easily deformed when being squeezed and collided, so that the battery cell 20 can have a higher structural strength and safety performance can also be improved. Functional components such as electrode terminals 21a may be provided on the end cover 21. The electrode terminal 21a can be used for electrical connection with the battery cell assembly 23 for outputting or inputting electric energy of the battery cell 20. In some embodiments, the end cover 21 may also be provided with a pressure relief mechanism for releasing the internal pressure when the internal pressure or temperature of the battery cell 20 reaches a threshold value. The material of the end cover 21 can also be various, for example, copper, iron, aluminum, stainless steel, aluminum alloy, plastic, and the like, which is not particularly limited in this embodiment of the present application. In some embodiments, an insulator can be provided inside the end cover 21, and the insulator can be used to isolate the electrical connection components in the shell 22 from the end cover 21 to reduce the risk of short circuit. Exemplarily, the insulator may be a plastic, a rubber, or the like.

The shell 22 is a component used to cooperate with the end cover 21 to form an internal environment of the battery cell 20, and the formed internal environment can be used to accommodate the cell assembly 23, an electrolyte, and other components. The shell 22 and the end cover 21 can be independent components, and an opening can be defined in the shell 22, and the internal environment of the battery cell 20 can be formed by making the end cover 21 cover the opening of the shell. Without limitation, the end cover 21 and the shell 22 can also be integrated. Specifically, the end cover 21 and the shell 22 can form a common connection surface before other components are inserted into the shell. When the inside of the shell 22 needs to be encapsulated, the shell 22 is covered by the end cover 21. The shell 22 can be in various shapes and sizes, such as cuboid, cylinder, hexagonal prism, and the like. Specifically, the shape of the shell 22 can be determined according to the specific shape and size of the battery core assembly 23. The shell 22 can be made of various materials, such as copper, iron, aluminum, stainless steel, aluminum alloy, plastic, and the like, which is not particularly limited in embodiments of the present application.

The battery cell assembly 23 is a component in the battery cell 100 where the electrochemical reaction occurs. One or more battery cell assemblies 23 may be contained in the shell 22. The battery cell assembly 23 is mainly formed by winding or stacking the cathode plate and the anode plate, and usually a separator is provided between the cathode plate and the anode plate. The parts of the cathode plate and the anode plate with active material constitute the main body of the battery cell assembly, and the parts of the cathode plate and the anode plate without active material respectively constitute tabs 23a. The cathode tab and the anode tab can be located at one end of the main body together or at two ends of the main body respectively. During the charging and discharging process of the battery, the cathode active material and the anode active material react with the electrolyte, and the tabs 23a are connected to the electrode terminals to form a current loop.

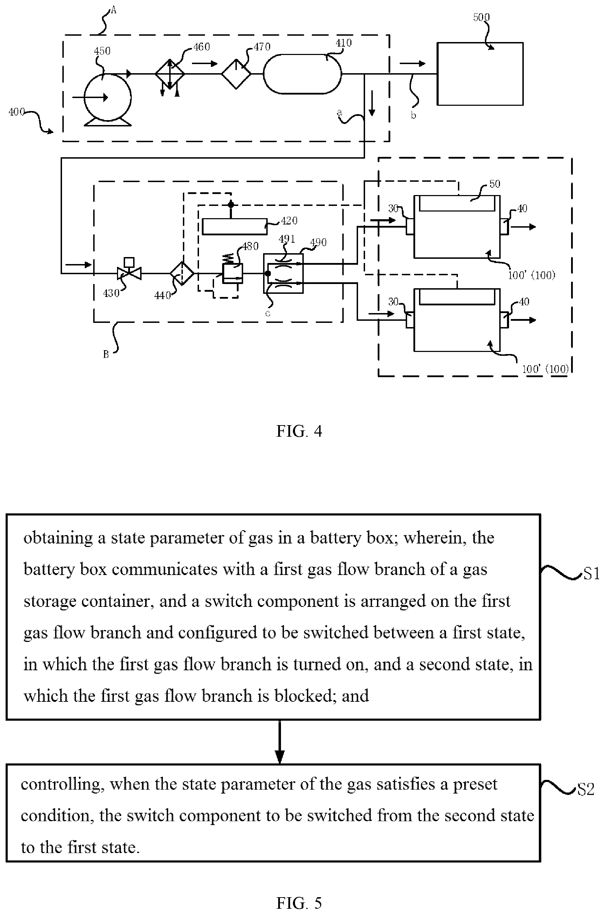

In one aspect, according to some embodiments of the present application, referring to FIG. 4, the present application provides a gas processing system 400, including: a gas storage container 410, a controller 420, and a switch component 430. The gas storage container 410 has a first gas flow branch a which is configured for communicating with the battery box 100' and supplying a dry gas to the battery box 100'. The controller 420 is configured to acquire a state parameter of a gas in the battery box 100'. The switch component 430 is arranged on the first gas flow branch a, and is configured to be switched between a first state in which the first gas flow branch a is turned on and a second state in which the first gas flow branch a is blocked. The controller 420 is in communication connection with the switch component 430, and is configured to control the switch component 430 to be switched from the second state to the first state when the state parameter of the gas acquired satisfies a preset condition.

The gas storage container 410 is a component with a certain storage space, and may be in the form of a gas storage tank, a gas storage cylinder, a gas storage bag, a gas storage bottle, etc., and is not specifically limited. In this embodiment, the gas storage container 410 is used to store dry gas. The first gas flow branch a may be a connection hard pipe, a connection hose, or other components fixedly connected to an outlet of the gas storage container 410, or a pipe formed directly at the outlet of the gas storage container 410, which is not specifically limited. The first gas flow branch a is connected to the housing of the battery box 100', and the dry gas in the gas storage container 410 enters the housing of the battery box 100' through an outlet of the gas storage container 410 and the first gas flow branch a.

The controller 420 and the switch component 430 can be arranged separately, or can be integrated as a whole. The controller 420 can be, but not limited to, a micro program controller, and generally includes a processing module (such as a microprocessor MCU) and a storage module (used to store computer programs, which can be a read-only memory module (ROM) or a random access memory module (RAM)), the processing module is configured to realize the output of instructions when executing the computer program. The specific form of the controller 420 is not limited here, as long as the functions in the embodiments of the present application can be realized. The switch component 430 may be, but not limited to, a pneumatic switch valve, an electric switch valve, etc., and its specific form is not limited, as long as the first gas flow branch a can be turned on and off.

The controller 420 can obtain the state parameter of the gas in the battery box 100' through a communication connection with a detection component that detects the state parameter of the gas in the battery box 100'. The detection component may include a humidity detector, a gas pressure detector, and the like. When the detection component includes a humidity detector, the state parameter of the gas acquired by the controller 420 includes the humidity feature of the gas. When the detection component includes a gas pressure detector, the state parameter of the gas obtained by the controller 420 include gas pressure feature. The detection component may be directly provided inside the battery box 100'. It can be understood that the manner in which the controller 420 obtains the state parameter of the gas in the battery box 100' is not limited to this, for example, the state parameter of the gas in the battery box 100' can also be obtained through an intermediate component that has obtained the state parameter of the gas from the detection component.

Under normal use conditions, the switch component 430 is in the second state of blocking the first gas flow branch a. In such condition, the gas in the battery box 100' is in a normal state (the gas is relatively dry and the humidity meets the requirements), and the state parameter of the gas obtained by the controller 420 do not meet the preset conditions, and the controller 420 controls the switch component 430 to not act. When the battery box 100' is in a complex environment, outside moisture may enter the battery box 100' due to the decrease in the internal gas pressure of the battery box 100', resulting in an increase in the internal humidity of the battery box 100'. In such condition, the state parameters the gas obtained by the controller 420 meet the preset conditions, the controller 420 controls the switch component 430 to switch to the first state, so that the dry gas in the gas storage container 410 can enter the battery box 100' through the first gas flow branch a, such that the gas inside the battery box 100' is replaced to ensure that the gas state inside the battery box 100' is normal.

Specifically, the preset conditions vary according to specific state parameters. For example, when the state parameter is a humidity feature, and the humidity feature represents a humidity value in the battery box 100', the preset condition can be whether the humidity value is higher than the first humidity threshold, and if it is higher, it means that the preset condition is satisfied, otherwise the preset condition is not satisfied. For another example, when the state parameter is a gas pressure feature, which represents a gas pressure value in the battery box 100', the preset condition can be whether the gas pressure value is lower than the gas pressure threshold. If it is lower, it means that the preset condition is satisfied, otherwise it is not satisfied. For another example, when the state parameter includes both the humidity feature and the gas pressure feature, the preset condition may be whether the humidity value is higher than the humidity threshold and whether the gas pressure value is lower than the gas pressure threshold. The setting of the preset condition is not specifically limited here, and may be set according to actual needs.

It can be understood that the state parameters are not limited to include the humidity feature and the gas pressure feature, but may also include a temperature feature. Understandably, when the temperature in the battery box 100' becomes higher, the pressure will be released, and it is possible that the external moisture will enter the inside of the battery box 100' at the end of the pressure release. In such condition, the temperature of the gas in the battery box 100' is collected at the same time. When the temperature of the gas is high, the gas storage container 410 can be used to provide a dry gas into the battery box 100', so as to prevent external moisture from entering the battery box 100'.

Understandably, when the acquired state parameter of the gas do not meet the preset conditions, the controller 420 can control the switch component 430 to switch from the first state to the second state, so as to avoid waste of dry gas. The dry gas stored in the gas storage container 410 may be, but not limited to, air, inert gas, nitrogen, and the like. The gas inside the battery box 100' may include air, inert gas, nitrogen, and the like. The present application does not limit the type of gas source.

By monitoring the state of the gas in the battery box 100', the above gas processing system 400 controls the gas storage container 410 to supply the dry gas to the battery box 100' and uses the supplied dry gas to maintain the gas in the battery box 100' in a dried state. In this way, it is avoided the formation of the condensed water caused by moisture condensation, which would otherwise damage the internal components of the battery box, or even cause safety hazards such as short circuits.

In some embodiments, the state parameter of the gas comprises a humidity feature, and the controller 420 is configured to control the switch component 430 to be switched from the second state to the first state when the humidity feature acquired satisfies a preset dehumidification condition.

The controller 420 may acquire the humidity feature of the gas in the battery box 100' based on a humidity sensor provided inside the battery box 100'. The dehumidification condition may be whether the humidity value corresponding to the humidity feature is higher than the humidity threshold. When the humidity value corresponding to the humidity feature obtained by the humidity sensor is higher than the humidity threshold, it means that the gas in the battery box 100' is relatively humid, and the gas in the battery box 100' needs to be replaced, so the controller 420 controls the switch component 430 to be switched from the second state to the first state and allows the dry gas in the gas storage container 410 to enter the battery box 100'.

In such condition, it is determined, directly according to the humidity feature of the gas, whether it is necessary to provide the dry gas to the battery box 100' and to replace the moisture in the battery box 100' with the dry gas, so as to avoid the generation of condensed water in a more accurate manner.

In some embodiments, referring to FIG. 4, the gas storage container 410 further has a second gas flow branch b, which is configured for communicating with a brake system 500 and supplying a brake gas to the brake system 500.

The second gas flow branch b may be a connection hard pipe, or a connection hose fixedly connected to the outlet of the gas storage container 410, or a pipe directly formed at the outlet of the gas storage container 410, which is not specifically limited.

The dry gas and the brake gas in the gas storage container 410 may be the same gas or different gases, which are not limited here. In an embodiment, the gas storage container 410 has an outlet, and the second gas flow branch b and the first gas flow branch a are both connected at the outlet, and in such condition, the gas flowing to the second gas flow branch b and the gas flowing to the first gas flow branch a are the same gas. In another embodiment, the gas storage container 410 has two outlets, one outlet is connected to the second gas flow branch b, and the other outlet is connected to the first gas flow branch a, and gases flowing out from the two outlets are the same gas. In other embodiments, different gases may flow out of the two outlets. For example, the gas storage container 410 has two independent gas storage chambers, and one gas storage chamber is connected to the first gas flow branch a and used to store the dry gas. Another gas storage chamber is connected with the second gas flow branch b and is used for storing the brake gas.

The brake system 500 is usually arranged on a traveling device (such as a vehicle, an airplane, etc.), and is mainly used for braking the traveling device. Taking the brake system 500 of a vehicle as an example, the brake system 500 may include a brake master valve, a relay valve, and a brake gas chamber, and the brake master valve is used to communicate with the second gas flow branch b for responding to a brake signal, the relay valve is connected between the brake gas chamber and the brake master valve, when the brake master valve responds to the brake signal, the brake gas flowing out of the second gas flow branch b is allowed to enter the brake gas chamber through the relay valve, under the pressurization of the brake gas, the brake gas chamber provides a brake force to the running gear (such as wheels) of the traveling device to drive the running gear to stop. The specific structure of the brake system 500 is not limited here, and the braking types of various existing traveling devices can be referred to, as long as the braking is realized by inputting the brake gas.

In such condition, the gas storage container 410 can not only provide dry gas to the battery box 100' of the traveling device through the first gas flow branch a, so as to ensure the safety performance of the battery box and improve the safety of power consumption of the traveling device, but also provide the brake system 500 of the traveling device with the dry gas. Therefore, the gas storage container has multiple functions, which not only improves the utilization rate of the gas storage container 410, but also helps to simplify the structure of the traveling device and reduce the cost.

In some embodiments, the state parameter of the gas comprises a gas pressure feature, and the controller 420 is configured to control the switch component 430 to be switched from the second state to the first state when the gas pressure feature acquired satisfies a preset inflation condition.

The controller 420 may acquire the gas pressure feature of the gas inside the battery box 100' based on the gas pressure sensor arranged inside the battery box 100'. The inflation condition may be, but not limited to, whether the gas pressure value corresponding to the gas pressure feature is higher than the gas pressure threshold. When the gas pressure value corresponding to the gas pressure feature acquired by the gas pressure sensor is higher than the gas pressure threshold, it means that the gas pressure in the battery box 100' is relatively small, and the outside moisture easily invades the inside of the battery box 100', in such condition, the controller 420 controls the switch components 430 to be switched from the second state to the first state, to allow the dry gas in the gas storage container 410 to enter the battery box 100' to increase the gas pressure in the battery box 100'.

In a preferred embodiment, the controller 420 is configured to control the switch component 430 to be switched from the first state to the second state when the acquired gas pressure feature indicates that the gas pressure in the battery box 100' is in a slightly positive pressure state. When the gas pressure in the battery box 100' is in a slightly positive pressure state, that is, the gas pressure in the battery box 100' changes slightly, the moisture outside the battery box 100' can also be prevented from entering the battery box 100'. In this way, moisture is prevented from entering the battery box 100' to a certain extent, which is conducive to the prevention of the condensed water from damaging the internal components of the battery box 100'. The slightly positive pressure state refers to the state where the gas pressure is slightly higher than the standard atmospheric pressure. The specific size of the slightly positive pressure is not limited here, and can be 0.1 MPa to 1 MPa higher than the standard atmospheric pressure. It can be understood that, in other embodiments, the controller 420 can also control the switch component 430 to be switched from the first state to the second state when the acquired gas pressure feature indicates that the gas pressure in the battery box 100' is in a normal pressure state (that is, in the standard atmospheric pressure).

In such condition, by monitoring the gas pressure of the gas in the battery box 100' to determine whether it is necessary to provide the dry gas to the battery box 100' to ensure the gas pressure in the battery box 100', the external moisture is prevented from entering the battery box 100' when the gas pressure in the battery box 100' is low, which is conducive to completely avoiding the generation of condensate water and the resulting safety hazards such as component damage and short circuit.

In some embodiments, the controller 420 is further configured to determine an gas tightness state of the battery box 100' according to the gas pressure feature acquired.

Specifically, the controller 420 may determine the gas tightness state of the battery box 100' according to the gas pressure value inside the battery box 100'. For example, when the gas pressure value is lower than the preset gas pressure value, it is indicated that the seal of the battery box 100' is invalid or fails to cause air leakage. Specifically, the controller 420 can also determine the gas tightness state of the battery box 100' according to the fluctuation of the gas pressure in the battery box 100'. For another example, when the change value of the gas pressure within a certain period of time exceeds the preset threshold, it is indicated that the battery box 100' is not sealed properly and thus leaks air. It can be understood that, the logic for the controller 420 to determine the gas tightness state is not limited to the above-mentioned manner.

When the controller 420 detects that the gas tightness of the battery box 100' is not good, the relevant personnel can be reminded, by means of an alarm (such as buzzer, email, warning light, notification message on the interactive interface, etc.), to carry out maintenance, so that it can be ruled out the problem of potential safety hazards which is caused by the external moisture entering the inside of the battery box 100' due to the failure of the sealing of the battery box 100'.

When the seal of the battery box 100' fails, it may not be possible to change the internal gas state only by supplying dry gas into the battery box 100', but in such condition, it can be detected in time when the seal of the battery box 100' fails, so that relevant personnel can find problems and repair the battery box in time, which can help the gas processing system 400 enter the normal operation state and prevent the deterioration of the internal environment of the battery box 100' in time.

In some embodiments, referring to FIG. 4, the gas processing system 400 further comprises a gas processing component 440. The gas processing component 440 is arranged on the first gas flow branch a, and is configured to purify and/or dry a dry gas flowing from the gas storage container 410 to the battery box 100'.

When the gas processing component 440 has a purification function and can absorb impurities, dust, and other particles in the dry air, it can be realized based on technologies such as activated carbon filtration, filter mesh filtration, electrostatic dust removal, and plasma dust removal, which are not limited herein. When having a drying function, the gas processing component 440 can further absorb moisture and oil in the dry air, this can be achieved by desiccants such as quicklime, soda lime, anhydrous calcium chloride, and anhydrous copper sulfate. The specific structure of the gas processing component 440 is not limited here, and it only needs to be able to further dry and purify the dry gas.

On the gas flow path, the gas processing component 440 is located before the battery box 100'. As for the relationship between the gas processing component 440 and the switch component 430, the gas processing component 440 can be located upstream of the switch component 430 or downstream of the switch component 430, which is not limited here.

In such condition, before entering the battery box 100', the dry gas is also purified and/or dried by the gas processing component 440, so that the impurity particles and oil stains in the dry air can be filtered and dried, and the impurity particles, oil stains, and the like can be prevented from entering the battery box. 100', which would otherwise cause damage to the internal components of the battery box 100' and short circuit inside the battery box 100' and result in potential safety hazards.

In some embodiments, referring to FIG. 4, the gas processing system 400 further includes an air compressor 450, a cooler 460, and a dryer 470. The cooler 460 is connected between the air compressor 450 and the dryer 470. The dryer 470 is connected with the gas storage container 410. A compressed air generated by the air compressor 450 is cooled by the cooler 460, dried by the dryer 470, and then stored in the gas storage container 410.

The air compressor 450 is a device capable of compressing air, which is a common device in the field, and the specific structure can refer to the existing structure, and will not be limited or repeated herein. The air compressed by the air compressor 450 has a certain temperature. In order to prevent the high-temperature gas from causing thermal damage to the battery box 100', the compressed air passes through the cooler 460 and exchanges heat with the cooler 460 to be cooled down. The cooler 460 uses the refrigerant (such as cooling water, refrigerant, cooling air) to exchange heat with the compressed air flowing through the cooler 460. The cooler 460 may be a plate cooler, a multitube cooler, an air-cooled cooler, and the like, the specific form of the cooler 460 is not limited here, as long as the cooler 460 can lower the temperature of the compressed air. The source of the compressed air is the atmosphere, and since moisture exists in the atmosphere (especially in a high-humidity environment), the dryer 470 is required to dry the compressed air. The dryer 470 can be an adsorption dryer or a freeze dryer, and the specific form is not limited as long as the compressed air can be dried.

On the flow path of the compressed air, the cooler 460 can be located upstream of the dryer 470, and the cooler 460 can condense a part of the moisture in the compressed air, which helps to improve the dryness of the compressed air. It can be understood that, in other embodiments, the cooler 460 may also be located downstream of the dryer 470, or the cooler 460 and the dryer 470 are integrated to cool down and dry the compressed air simultaneously.

In such condition, the compressed air generated by the air compressor 450 is used as the air source, and stored in the gas storage container 410 after being cooled and dried. The gas source comes from a wide variety of sources and the cost is relatively low. Moreover, when the gas processing system 400 is applied to a traveling device such as a vehicle, the air compressor 450, the cooler 460, the dryer 470, and the gas storage container 410 which have been equipped in the traveling device for providing the brake air to the brake system 500 can be respectively used as parts of the gas processing system 400 and be combined to form the gas processing system 400, the improvement cost of which is low.

In some embodiments, referring to FIG. 4, the gas processing system 400 further includes a decompression component 480, and the decompression component 480 is arranged in the first gas flow branch a.

The decompression component 480 may be, but not limited to, a decompression valve, a decompression chamber and the like, as long as the dry gas can reduce the pressure when it flows through the first gas flow branch a. The pressure reducing valve can adopt common parts such as bellows type pressure reducing valve, piston type pressure reducing valve, membrane type pressure reducing valve. The decompression gas chamber has a volume cavity having a flow rate greater than that of the first gas flow branch a, and when the dry gas enters the volume cavity, the pressure and speed decrease due to the increase of the flow area.

Since the compressed air generated by the air compressor 450 has a certain pressure, in such condition, when the dry air enters the inside of the battery box 100' through the decompression component 480, the pressure is appropriately reduced, which can reduce the impact and damage of the high-pressure gas on the internal components of the battery box 100', and meanwhile the balance valve/explosion-proof valve on the battery box 100' can be prevented from starting to release pressure due to the high internal pressure of the battery box 100'.

In some embodiments, the state parameter of the gas comprises a gas pressure feature, and the controller 420 is in communication connection with the decompression component 480 and is configured to adjust an outlet pressure of the decompression component 480 according to the gas pressure feature acquired.

The decompression component 480 may be an electromagnetic decompression valve or a pneumatic decompression valve. In such condition, the controller 420 can control a decompression range of the decompression component 480 to adjust an outlet pressure. Taken the electromagnetic pressure reducing valve as an example, the electromagnetic pressure reducing valve includes an electromagnetic pilot valve and a pressure reducing valve. The controller 420 can control the opening of the pressure reducing valve by controlling the electromagnetic effect of the electromagnetic pilot valve. The electromagnetic pressure reducing valve is a commonly used component in this field. Its specific structure and the usages are all conventional means in the art, and will not be limited or repeated in embodiments of the present application.

When the gas pressure feature of the gas in the battery box 100' indicate that the internal gas pressure of the battery box 100' drops rapidly (such as the cooling and compression pressure of the gas inside the battery box 100' in a rapidly cooling environment decreases), the external moisture may enter the battery box 100', and the controller 420 can control and increase the outlet pressure of the decompression component 480, so as to speed up the dry gas entering the inside of the battery box 100' and to remove the moisture and realize timely dehumidification.

In such condition, the controller 420 can adjust the outlet pressure of the decompression component 480 according to the gas pressure feature in the battery box 100', which is helpful for timely dehumidification inside the battery box 100'.

It can be understood that, in other embodiments, the controller 420 may also be configured to control the decompression valve to maintain a certain pressure according to a set value. Alternatively, the outlet pressure of the decompression component 480 is controlled and adjusted according to the pressure in the gas storage container 410, so that the outlet pressure remains at a certain pressure.

In some embodiments, referring to FIG. 4, the gas processing system 400 comprises a gas distribution component 490. The gas distribution component 490 is in connection with the first gas flow branch a, and is arranged at a flow path where the dry gas flows from the first gas flow branch a to the battery box 100'. The gas distribution component 490 has at least one gas distribution branch c, one end of each gas distribution branch c communicates with the first gas flow branch a, and the other end of each gas distribution branch c is configured to communicate with the battery box 100'.

The gas distribution component 490 can be constructed by forming a plurality of gas distribution branches c in a distribution block, or can be formed by a plurality of parallel connecting pipelines. The specific structure is not limited here, as long as the above functions can be achieved.

In such condition, the dry air flowing out from the first gas flow branch a can flow into one battery box 100' through a corresponding gas distribution branch c, so that dehumidification management can be performed on a plurality of battery boxes 100' at the same time, and the utilization of the gas processing system 400 can be improved.

In some embodiments, referring to FIG. 4, a flow valve 491 is arranged on each gas distribution branch c. The flow valve 491 can adopt a commonly used type in the field, and will not be limited or repeated here.

The gas flow of each gas distribution branch c can be controlled by the flow valve 491. When the battery box 100' connected with the gas distribution branch c needs to input the dry gas, the corresponding flow valve 491 can be opened, and when the battery box 100' connected with the gas distribution branch c does not need to input the dry gas, the corresponding flow valve 491 can be closed. When the gas pressure drop in the battery box 100' connected with the gas distribution branch c is relatively small, the opening of the flow valve 491 can be reduced (to ensure the normal gas pressure inside the battery box 100'); and when the gas pressure drop in the battery box 100' connected with the gas distribution branch c is relatively large, the opening of the flow valve 491 can be increased (to ensure the normal gas pressure inside the battery box 100').

In such condition, the dehumidification control can be performed independently according to the actual situation of each battery box 100', and the control is more precise.

Specifically, the controller 420 is in communication connection with the flow valve 491, and the controller 420 is configured to control and adjust an opening degree of the flow valve 491 according to the gas pressure feature or the humidity feature. It is also possible that the flow valve 491 itself is equipped with a communication module and a processing module, in which, the communication module is in communication with the humidity sensor or the gas pressure sensor in the battery box 100', and the processing module controls and adjusts the opening degree of the flow valve 491 according to the gas pressure feature or the humidity feature acquired by the communication module. It can be understood that, the adjustment of the opening degree of the flow valve 491 is not limited to the above-mentioned manner.

In a preferred embodiment, referring to FIG. 4, the gas processing system 400 includes: a gas storage container 410, a controller 420, a switch component 430, a gas processing component 440, a gas distribution component 490, a decompression component 480, an air compressor 450, a cooler 460, and a dryer 470. The air compressor 450, the cooler 460, the dryer 470, and the gas storage container 410 are connected in sequence, and the gas storage container 410, the switch component 430, the gas processing component 440, the decompression component 480, and the gas distribution component 490 are sequentially connected via the first gas flow branch a. Each gas distribution branch c of the gas distribution component 490 is connected to one corresponding battery box 100'. The controller 420 is in communication connection with the switch component 430, the decompression component 480, and the flow valves 491 on the respective gas distribution branches c of the gas distribution component 490, and can control the above parts to perform the corresponding actions in the above-mentioned embodiments, which can be refer to the above-mentioned embodiments for details, and will not be repeated here.

As shown in FIG. 4, in actual operation, on the basis that the air compressor 450, the cooler 460, the dryer 470, and the gas storage container 410 which are connected in sequence to form the gas source part A to prepare the brake gas in existing electrical devices such as vehicles, a processing part B composed of a gas storage container 410, a switch component 430, a gas processing component 440, a decompression component 480 and a gas distribution component 490 is additionally constructed, so as to form the gas processing system 400 in embodiments of the present application.

In another aspect, according to some embodiments of the present application, referring to FIG. 5, the present application further provides a control method of a gas processing system 400. The control method of the gas processing system 400 provided in the present application includes the following steps:
step S1, obtaining a state parameter of gas in a battery box 100'; in which, the battery box 100' communicates with a first gas flow branch a of a gas storage container 410, and a switch component 430 is arranged on the first gas flow branch a and configured to be switched between a first state, in which the first gas flow branch a is turned on, and a second state, in which the first gas flow branch a is blocked; and
step S2, controlling, when the state parameter of the gas satisfies a preset condition, the switch component 430 to switch from the second state to the first state.

The gas processing system 400 involved in this embodiment may be, but not limited to, the gas processing system 400 provided in any of the above embodiments. The gas processing system 400 includes a gas storage container 410, a controller 420, and a switch component 430. The gas storage container 410 has a first gas flow branch a for communicating with the battery box 100' and providing dry gas to the battery box 100', The switch component 430 is disposed on the first gas flow branch a, and can be switched between a first state, in which the first gas flow branch a is turned on, and a second state, in which, the first gas flow branch a is blocked. The controller 420 is used to obtain the state parameter of the gas in the battery box 100' and communicate with the switch component 430, and can control the switch component 430 to be switched from the second state to the first state when the state of the gas obtained meets the preset condition. Specific structure and form of the gas storage container 410, the controller 420, and the switch component 430 can be referred to the description of the above embodiments, which will not be repeated herein.

The execution subject of the control method of the gas processing system 400 provided in this embodiment is the controller 420. The controller 420 can obtain the state parameter of the gas in the battery box 100' through a communication connection with a detection component that detects the state parameter of the gas in the battery box 100'.

The controller 420 may start to execute step S1 when the gas processing system 400 enters a power-on state or receives a corresponding control command. The control command may be triggered by the user, or sent by a control system (such as a vehicle central control system) of the traveling device equipped with the gas processing system 400, which is not specifically limited.

The state parameter of the gas in the battery box 100' includes, but are not limited to, a humidity feature and a gas pressure feature. The preset conditions vary according to the type of the obtained state parameter. For example, when the state parameter is the humidity feature, and the humidity feature represents the humidity value in the battery box 100', the preset condition can be whether the humidity value is higher than the first humidity threshold, and if it is higher, it means that the preset condition is satisfied, otherwise, the preset condition is not satisfied. For another example, when the state parameter is the gas pressure feature, which represents the gas pressure value in the battery box 100', the preset condition can be whether the gas pressure value is lower than the gas pressure threshold. If it is lower, it means that the preset condition is satisfied, otherwise, the preset condition is not satisfied. For another example, when the state parameter includes both humidity feature and gas pressure feature, the preset condition may be whether the humidity value is higher than the humidity threshold and whether the gas pressure value is lower than the gas pressure threshold. The setting of the preset condition is not specifically limited here, and may be set according to actual needs.

Under a normal use condition, the switch component 430 is in the second state where the first gas flow branch a is blocked. In such condition, the gas in the battery box 100' is in a normal state (the gas is relatively dry and the humidity meets the requirements), and the state parameter of the gas acquired by the controller 420 does not meet the preset conditions, and the controller 420 controls the switch component 430 to not act. When the battery box 100' is in a complex environment, the outside moisture may enter the battery box 100' due to the decrease in the gas pressure inside the battery box 100', resulting in an increase in the internal humidity of the battery box 100'. In such condition, the state parameter of the gas acquired by the controller 420 meet the preset conditions, the controller 420 controls the switch component 430 to switch to the first state, so that the dry gas in the gas storage container 410 can enter the battery box 100' through the first gas flow branch a, so as to replace the gas inside the battery box 100' to ensure a normal gas state inside the battery box 100'.

The controller 420 continuously acquires the state parameter of the gas in the battery box 100'. It can be understood that, with the input of dry air, the state parameter of the gas in the battery box 100' gradually return to normal. When the state parameter of the gas pressure acquired by the controller 420 does not satisfy the preset condition, the controller 420 can control the switch component 430 to be switched from the first state to the second state to avoid waste of the dry gas.

By monitoring the state of the gas in the battery box 100', the above control method of the gas processing system 400 controls the gas storage container 410 to supply the dry gas to the battery box 100' and uses the supplied dry gas to maintain the gas in the battery box 100' in a dried state. In this way, it is avoided the formation of the condensed water caused by moisture condensation, which would otherwise damage the internal components of the battery box, or even cause safety hazards such as short circuits.

In some embodiments, compared with the above embodiments, the difference is that the state parameter of the gas comprises a humidity feature, and the step S2 of controlling, when the state parameter of the gas satisfies a preset condition, the switch component 430 to be switched from the second state to the first state comprises:
step S2a, controlling, when the humidity feature satisfies a preset dehumidification condition, the switch component 430 to switch from the second state to the first state.

In this embodiment, the state parameter of the gas include humidity feature. The controller 420 may acquire the humidity feature of the gas in the battery box 100' based on the humidity sensor arranged inside the battery box 100'.

The dehumidification condition may be whether the humidity value corresponding to the humidity feature is higher than the humidity threshold. When the humidity value corresponding to the humidity feature obtained by the humidity sensor is higher than the humidity threshold, it means that the gas in the battery box 100' is relatively humid, and the gas in the battery box 100' needs to be replaced, so the controller 420 controls the switch component 430 to be switched from the second state to the first state and allows the dry gas in the gas storage container 410 to enter the battery box 100'.

In such condition, it is determined, directly according to the humidity feature of the gas, whether it is necessary to provide the dry gas to the battery box 100' and to replace the moisture in the battery box 100' with the dry gas, so as to avoid the generation of condensed water in a more accurate manner.

In some embodiments, compared with the above embodiments, the difference is that the state parameter of the gas comprises a gas pressure feature, and the step S2 of controlling, when the state parameter of the gas satisfies a preset condition, the switch component 430 to be switched from the second state to the first state comprises:
step S2b, controlling, when the gas pressure feature satisfies a preset inflation condition, the switch component 430 to switch from the second state to the first state.

In this embodiment, the gas state parameters include gas pressure feature. The controller 420 may acquire the gas pressure feature of the gas inside the battery box 100' based on the gas pressure sensor arranged inside the battery box 100'. The inflation condition may be, but not limited to, whether the gas pressure value corresponding to the gas pressure feature is higher than the gas pressure threshold. When the gas pressure value corresponding to the gas pressure feature acquired by the gas pressure sensor is higher than the gas pressure threshold, it means that the gas pressure in the battery box 100' is relatively small, and the outside moisture easily invades the inside of the battery box 100', in such condition, the controller 420 controls the switch components 430 to be switched from the second state to the first state, to allow the dry gas in the gas storage container 410 to enter the battery box 100' to increase the gas pressure in the battery box 100'.

In such condition, by monitoring the gas pressure of the gas in the battery box 100' to determine whether it is necessary to provide the dry gas to the battery box 100' to ensure the gas pressure in the battery box 100', the external moisture is prevented from entering the battery box 100' when the gas pressure in the battery box 100' is low, which is conducive to completely avoiding the generation of condensate water and the resulting safety hazards such as component damage and short circuit.

Specifically, in an example, after step S2b, the method further includes the following step: controlling, when the gas pressure feature indicates that the battery box 100' is in a slightly positive pressure state, the switch component 430 to be switched from the first state to the second state,

During the inflation process, the controller 420 continuously acquires the gas pressure feature in the battery box 100'. When the gas pressure feature acquired in real time indicates that the battery box 100' is in a slightly positive pressure state, the controller 420 controls the switch component 430 to be switched back to the second state, and the inflation ends. The slightly positive pressure state refers to the state where the gas pressure is slightly higher than the standard atmospheric pressure. The specific size of the slightly positive pressure is not limited here, and can be 0.1 MPa to 1 MPa higher than the standard atmospheric pressure.

In such condition, when the gas pressure in the battery box 100' is in a slightly positive pressure state, that is, the gas pressure in the battery box 100' changes slightly, the moisture outside the battery box 100' can also be prevented from entering the battery box 100'. In this way, moisture is prevented from entering the battery box 100' to a certain extent, which is conducive to the prevention of the condensed water from damaging the internal components of the battery box 100'.

In some embodiments, compared with the above embodiments, the difference is that, after the step S 1 of obtaining the state parameter of the gas in the battery box 100', the method further comprises: determining a gas tightness state of the battery box 100' according to the gas pressure feature.

The gas pressure value of the gas in the battery box 100' is obtained from the gas pressure feature, and the controller 420 can determine the gas tightness state of the battery box 100' according to the gas pressure value in the battery box 100'. For example, when the gas pressure value is lower than the preset gas pressure value, it is indicated that the seal of the battery box 100' is invalid or fails to cause air leakage. Specifically, the controller 420 can also determine the gas tightness state of the battery box 100' according to the fluctuation of the gas pressure in the battery box 100'. For another example, when the change value of the gas pressure within a certain period of time exceeds the preset threshold, it is indicated that the battery box 100' is not sealed properly and thus leaks air. It can be understood that, the logic for the controller 420 to determine the gas tightness state is not limited to the above-mentioned manner.

When the controller 420 detects that the gas tightness of the battery box 100' is not good, the relevant personnel can be reminded, by means of an alarm (such as buzzer, email, warning light, notification message on the interactive interface, etc.), to carry out maintenance, so that it can be ruled out the problem of potential safety hazards which is caused by the external moisture entering the inside of the battery box 100' due to the failure of the sealing of the battery box 100'.

When the seal of the battery box 100' fails, it may not be possible to change the internal gas state only by supplying dry gas into the battery box 100', but in such condition, it can be detected in time when the seal of the battery box 100' fails, so that relevant personnel can find problems and repair the battery box in time, which can help the gas processing system 400 enter the normal operation state and prevent the deterioration of the internal environment of the battery box 100' in time.

In still another aspect, embodiments of the present application further provide an electrical device. The electrical device comprises a battery box 100' and the gas processing system 400 provided in any of the above embodiments. The first gas flow branch a is connected to the battery box 100'. The battery box 100' is provided with a detector 50 which is configured for obtaining a state parameter of the gas in the battery box 100', and the controller 420 is in communication connection with the detector 50 and is configured to obtain the state parameter of the gas from the detector 50.

The detector 50 may be a humidity sensor, a gas pressure sensor, or a combination thereof. The detector 50 may also include a temperature sensor. The specific structure of the detector 50 is not limited here, as long as the preset requirements can be met. The controller 420 obtains the state parameter of the gas in the battery box 100' through the detector 50 arranged in the battery box 100'.

Due to the inclusion of the gas processing system 400 in the above embodiments, the electrical device has all the beneficial effects of the gas processing system 400 mentioned above, which will not be repeated here.

In some embodiments, referring to FIG. 4, the battery box 100' has a gas inlet and a gas outlet for communicating an inside and an outside of the battery box 100', and the gas inlet communicates with the first gas flow branch a. The battery box 100' comprises a ventilation component 40 arranged at the gas outlet, and the ventilation component 40 is configured to allow air to flow from a side having a relatively high gas pressure to a side having a relatively low gas pressure through the gas outlet in case of a pressure difference between the inside and the outside the battery box 100'.

Understandably, the gas inlet and the gas outlet are arranged on the casing of the battery box 100'.

The ventilation component 40 can be a balance valve/explosion-proof valve, which actively opens the gas outlet when the pressure difference inside and outside the battery box 100' exceeds the pressure that the battery box 100' can withstand, so as to allow air to flow from the side with a high gas pressure to the side with a low gas pressure through the gas outlet. In such condition, the pressure that the balance valve/explosion-proof valve itself can withstand determines the allowable pressure difference between the inside and outside of the battery box 100'. As for the specific structure of the balance valve/explosion-proof valve, reference can be made to the existing structure, thus no limitation or description is given here. In such condition, when the ventilation component 40 actively opens and closes the gas outlet, the control cost can be reduced.

When the ventilation component 40 can also be a switch valve, the ventilation component 40 can establish communication connection with the controller 420 and passively open and close the gas outlet under the control of the controller 420. When there is a pressure difference between the inside and outside of the battery box 100', the ventilation component 40 opens the gas outlet under the control of the controller 420 to allow air to flow from a side with a high gas pressure to a side with a low gas pressure via the gas outlet. The controller 420 can determine whether the pressure in the battery box 100' exceeds a set threshold based on the acquired gas pressure feature, so as to determine whether there is a pressure difference between the inside and outside of the battery box 100'. When the pressure in the battery box 100' exceeds the set threshold (that is, the pressure difference between the inside and the outside of the battery box 100' exceeds the set pressure difference), the controller 420 controls the switch valve to open the gas outlet to release the pressure. In such condition, when the ventilation component 40 passively opens and closes the gas outlet, the threshold value can be set according to different requirements, and the opening and closing control of the gas outlet is more flexible.

The ventilation component 40 can also be a gas-permeable device that is kept in a normally open state and has a certain gas permeability. When a pressure difference exists between the inside and the outside the battery box 100', the gas-permeable device allows air to flow from a side with a high gas pressure to a side with a low gas pressure via the gas outlet. The gas-permeable device may include, but is not limited to, a gas-permeable film, such as a thermoplastic polyurethane permeable film, a polytetrafluoroethylene permeable film, and the like. In such condition, the ventilation component 40 can maintain the pressure balance between the inside and the outside of the battery box 100', and is economical.

Ventilation components 40 are provided at the gas outlet of the battery box 100' to allow the air inside and outside the battery box to ventilate through the gas outlet. When the dry gas is input into the battery box 100', the pressure inside the battery box 100' changes and has a positive pressure difference with the outside of the battery box 100'. In such condition, the original moisture inside the battery box 100' can be driven by the dry gas to the outside of the battery box 100' through the gas outlet, thereby achieving dehumidification.

In some embodiments, referring to FIG. 4, the battery box 100' further comprises a gas intake component 30, which is configured for opening and closing the gas inlet, and the gas intake component 30 is in communication with the first gas flow branch a.

The gas intake component 30 can be a component with a connection interface such as an air intake valve, which is convenient for connecting the first gas flow branch a to the gas inlet of the battery box 100'. In addition, the gas intake component 30 can open and close the gas inlet. When the battery box 100' does not need to be connected to the first gas flow branch a, the gas intake component 30 closes the gas inlet, which is convenient to the transportation and storage of the battery box 100'. When the battery needs to be connected to the first gas flow branch a, the gas intake component 30 opens the gas inlet, and ensures the gas tightness of the battery box 100' through the switch component 430; or alternatively, the gas intake component 30 can also be in communication connection with the controller 420, the controller 420 controls the gas intake component 30 to open and close the gas inlet. When there is no need to deliver the dry gas into the battery box 100', the controller 420 controls the gas intake component 30 to keep the gas inlet closed, so as to ensure the tightness of the battery box 100'. Compared with ensuring the gas tightness of the battery box 100' through the switch component 430, the measurement of the state parameter of the gas in the battery box 100' is more accurate.

In some embodiments, referring to FIG. 4, the electrical device comprises a brake system 500, and the gas storage container also has a second gas flow branch b, which is configured to communicate with the brake system 500 and provide a brake gas for the brake system 500.

The brake system 500 is usually arranged on a traveling device (such as a vehicle, an airplane, etc.), and is mainly used for braking the traveling device. Taking the brake system 500 of a vehicle as an example, the brake system 500 may include a brake master valve, a relay valve, and a brake gas chamber, and the brake master valve is used to communicate with the second gas flow branch b for responding to a brake signal, the relay valve is connected between the brake gas chamber and the brake master valve, when the brake master valve responds to the brake signal, the brake gas flowing out of the second gas flow branch b is allowed to enter the brake gas chamber through the relay valve, under the pressurization of the brake gas, the brake gas chamber provides a brake force to the running gear (such as wheels) of the traveling device to drive the running gear to stop. The specific structure of the brake system 500 is not limited here, and the braking types of various existing traveling devices can be referred to, as long as the braking is realized by inputting the brake gas.

In such condition, the gas storage container 410 can not only provide dry gas to the battery box 100' of the traveling device through the first gas flow branch a, so as to ensure the safety performance of the battery box and improve the safety of power consumption of the traveling device, but also provide the brake system 500 of the traveling device with the dry gas. Therefore, the gas storage container has multiple functions, which not only improves the utilization rate of the gas storage container 410, but also helps to simplify the structure of the traveling device and reduce the cost.

The various technical parameters of the above embodiments can be combined arbitrarily. In order to make the description concise, not all possible combinations of the various technical parameters in the above embodiments are described. However, as long as there is no contradiction in the combination of these technical parameters, such combination should be considered as within the scope of this specification.

The above embodiments only express several implementation modes of the present application, and the description thereof is relatively specific and detailed, but should not be construed as limiting the scope of the patent application. It should be noted that those skilled in the art can make several modifications and improvements without departing from the concept of the present application, and these all belong to the protection scope of the present application. Therefore, the protection scope of the patent application should be based on the appended claims.

## Claims

1. A gas processing system, comprising:
a gas storage container, having a first gas flow branch configured for communicating with a battery box and configured to supply a dry gas to the battery box;
a controller, configured to acquire a state parameter of a gas in the battery box; and
a switch component, arranged on the first gas flow branch and configured to be switched between a first state, in which the first gas flow branch is turned on, and a second state, in which the first gas flow branch is blocked;
wherein
the controller is in communication connection with the switch component, and configured to control the switch component to be switched from the second state to the first state when the state parameter of the gas acquired satisfies a preset condition.

2. The gas processing system according to claim 1, wherein the state parameter of the gas comprises a humidity feature; and the controller is configured to control the switch component to be switched from the second state to the first state when the humidity feature acquired satisfies a preset dehumidification condition.

3. The gas processing system according to claim 1, wherein the gas storage container further has a second gas flow branch, configured for communicating with a brake system and supplying a brake gas to the brake system.

4. The gas processing system according to claim 1, wherein the state parameter of the gas comprises a gas pressure feature, and the controller is configured to control the switch component to be switched from the second state to the first state when the gas pressure feature acquired satisfies a preset inflation condition.

5. The gas processing system according to claim 4, wherein the controller is further configured to determine a gas tightness state of the battery box according to the gas pressure feature acquired.

6. The gas processing system according to claim 1, wherein
the gas processing system further comprises a gas processing component; and
the gas processing component is arranged on the first gas flow branch and is configured to purify and/or dry a dry gas flowing from the gas storage container to the battery box.

7. The gas processing system according to claim 1, wherein
the gas processing system further comprises: an air compressor, a cooler, and a dryer; the cooler is connected between the air compressor and the dryer; the dryer is connected with the gas storage container; and
a compressed air generated by the air compressor is cooled by the cooler, dried by the dryer, and then stored in the gas storage container.

8. The gas processing system according to claim 7, wherein the gas processing system further comprises a decompression component, and the decompression component is arranged in the first gas flow branch.

9. The gas processing system according to claim 8, wherein
the state parameter of the gas comprises a gas pressure feature; and
the controller is in communication connection with the decompression component and is configured to adjust an outlet pressure of the decompression component according to the gas pressure feature acquired.

10. The gas processing system according to claim 1, wherein the gas processing system comprises a gas distribution component, the gas distribution component is in connection with the first gas flow branch, and is arranged at a flow where the dry gas flows from the first gas flow branch to the battery box; and
the gas distribution component has at least one gas distribution branch, one end of each gas distribution branch communicates with the first gas flow branch, and another end of each gas distribution branch is configured to communicate with the battery box.

11. The gas processing system according to claim 10, wherein a flow valve is arranged on each gas distribution branch.

12. A control method of a gas processing system, comprising the steps of:
obtaining a state parameter of gas in a battery box; wherein, the battery box communicates with a first gas flow branch of a gas storage container, and a switch component is arranged on the first gas flow branch and configured to be switched between a first state, in which the first gas flow branch is turned on, and a second state, in which the first gas flow branch is blocked; and
controlling, when the state parameter of the gas satisfies a preset condition, the switch component to be switched from the second state to the first state.

13. The control method of a gas processing system according to claim 12, wherein the state parameter of the gas comprises a humidity feature, and the step of controlling, when the state parameter of the gas satisfies a preset condition, the switch component to be switched from the second state to the first state comprises:
controlling, when the humidity feature satisfies a preset dehumidification condition, the switch component to be switched from the second state to the first state.

14. The control method of a gas processing system according to claim 12, wherein the state parameter of the gas comprises a gas pressure feature, and the step of controlling, when the state parameter of the gas satisfies a preset condition, the switch component to be switched from the second state to the first state comprises:
controlling, when the gas pressure feature satisfies a preset inflation condition, the switch component to be switched from the second state to the first state.

15. The control method of a gas processing system according to claim 14, wherein after the step of obtaining the state parameter of the gas in the battery box, the method further comprises: determining a gas tightness state of the battery box according to the gas pressure feature.

16. An electrical device, comprising a battery box and the gas processing system according to any one of claims 1-11, wherein
the first gas flow branch is connected to the battery box;
the battery box is provided therein with a detector, configured for obtaining the state parameter of the gas in the battery box, and
the controller is in communication connection with the detector and is configured to acquire the state parameter of the gas from the detector.

17. The electrical device according to claim 16, wherein
the battery box has a gas inlet and a gas outlet for communicating an inside and an outside of the battery box, and the gas inlet communicates with the first gas flow branch; and
the battery box comprises a ventilation component arranged at the gas outlet, and the ventilation component is configured to allow air to flow from a side having a relatively high gas pressure to a side having a relatively low gas pressure through the gas outlet in case of a pressure difference between the inside and the outside the battery box.

18. The electrical device according to claim 17, wherein the battery box further comprises a gas intake component, configured for opening and closing the gas inlet, and the gas intake component is in communication with the first gas flow branch.

19. The electrical device according to claim 16, wherein the electrical device comprises a brake system; the gas storage container further has a second gas flow branch; and the second gas flow branch is configured to communicate with the brake system and provide a brake gas for the brake system.
